# EUROPEAN PATENT APPLICATION

(11) **EP 3 950 205 A1**
(43) Date of publication of application: **09.02.2022**
(21) Application number: 19922160.7
(22) Date of filing: 10.12.2019
(51) Int. Cl.: B23K 26/00, B23K 26/064, B23K 26/082

(54) **LASER MACHINING DEVICE**

(30) Priority: 26.03.2019 JP 2019059501
(71) Applicant: Panasonic Intellectual Property Management Co., Ltd., Osaka-shi, Osaka 540-6207 (JP)
(72) Inventor: NAGATOSHI, Keita, Osaka-shi, Osaka 540-6207 (JP); YAMAZAKI, Naoya, Osaka-shi, Osaka 540-6207 (JP); MATSUMOTO, Akihisa, Osaka-shi, Osaka 540-6207 (JP); LIU, Hanfei, Osaka-shi, Osaka 540-6207 (JP); WAKAKO, Koichi, Osaka-shi, Osaka 540-6207 (JP)
(74) Representative: Petraz, Gilberto Luigi
(86) International application number: PCT/JP2019/048332
(87) International publication number: WO 2020/194904

(57) **Abstract**

An oscillator unit 11 has: a housing 21 for housing a laser beam source 22 and a laser-beam-source driving circuit 23; and connection portions 32, 33 connected to cables SL1, SP1 at a side 21a of the housing 21, connection portions 34, 35 connected to cables SL2, SP2 at the side 21a, and a connection portion 31 connected to an optical fiber cable FL at the side 21a.

## Description

### TECHNICAL FIELD

The present invention relates to a laser machining device.

### BACKGROUND ART

A typical laser machining device irradiates the surface of a workpiece with a laser beam to engrave a character, a symbol, a figure, or the like (refer to, for example, Patent Document 1).

The laser machining device of Patent Document 1 includes an oscillator unit (laser emission unit) that includes a laser beam source, a head unit (scan unit) that performs scanning with a laser beam, and a controller unit. The controller unit is connected to the oscillator unit by an electric cable. The controller unit is connected to the head unit by another electric cable. The oscillator unit is connected to the head unit by an optical fiber cable.

### PRIOR ART DOCUMENTS

### Patent Documents

Patent Document 1: Japanese Laid-Open Patent Publication No. 2004-351516

### SUMMARY OF THE INVENTION

In the above laser machining device, the head unit, the oscillator unit, and the controller unit are separate from one another. This increases the degree of freedom for layout. However, the head unit and the oscillator unit are connected by the optical fiber cable. Thus, when the optical fiber cable is long, the laser beam will attenuate in the optical fiber cable. This limits the distance between the head unit and the oscillator unit.

Further, in the laser machining device of Patent Document 1, the head unit and the oscillator unit are connected to the controller unit by separate electric cables. Thus, the length of the optical fiber cable between the head unit and the oscillator unit and the length of each electric cable need to be set when determining the routing path for each cable. This results in complicated wiring. Thus, there is a desire to further improve the degree of freedom for layout.

It is an objective of the present invention to provide a laser machining device that improves the degree of freedom for layout.

A laser machining device in one aspect of the present disclosure includes an oscillator unit including a laser beam source that emits a laser beam and a laser beam source drive circuit that drives the laser beam source; a head unit connected to the oscillator unit by a first electric cable and an optical fiber cable, the head unit including a laser scanner that performs scanning with the laser beam transmitted through the optical fiber cable and a scanner drive circuit that drives the laser scanner; and a controller unit connected to the oscillator unit by a second electric cable, the controller unit including a laser power supply that supplies power to the laser beam source drive circuit through the second electric cable and a scan power supply that supplies power to the scanner drive circuit through the second electric cable and the first electric cable. Identification information is set in advance for each of the oscillator unit, the head unit, and the controller unit. The controller unit includes a storage that stores the identification information of itself, the identification information of the oscillator unit that corresponds to the controller unit, and the identification information of the head unit that corresponds to the controller unit; a determination unit that compares identification information of the oscillator unit connected to the controller unit and identification information of the controller unit connected to the controller unit with the identification information stored in the storage and determines whether the information is in correspondence; and a display that displays information related to non-correspondence when the determination unit determines that the information is in non-correspondence. The oscillator unit includes a housing that accommodates the laser beam source and the laser beam source drive circuit; and a first connector connected to the first electric cable, a second connector connected to the second electric cable, and a third connector connected to the optical fiber cable, in which the first connector, the second connector, and the third connector are arranged on a side surface of the housing.

In the above aspect, the oscillator unit includes the first to third connectors that are arranged on the side surface of the housing. Thus, there is no need for the distance to be longer than necessary between the head unit and the oscillator unit, which are connected by the electric cable and the optical fiber cable. The distance can be increased between the oscillator unit and the controller unit, which are connected by the electric cable. Further, the oscillator unit and the head unit are connected by the electric cable and the optical fiber cable. This allows the cables to be laid out along the same routing path. Thus, the routing path of the cables can be simplified, and the degree of freedom for layout can be increased. The controller unit includes the display so that information related to non-corresponding identification is displayed at least on the display. Thus, while increasing the degree of freedom for layout, non-corresponding identification information can be checked from the controller unit when connecting the head unit and the oscillator unit, which are set at a location where machining is performed and separated from where the controller unit is set. This facilitates the task for performing re-connecting to the proper unit. In the oscillator unit, the connectors for the cables are arranged on the side surface of the housing. This simplifies the layout of the cables.

One aspect of the present disclosure provides a laser machining device that improves the degree of freedom for layout.

### BRIEF DESCRIPTION OF THE DRAWINGS

Fig. 1 is a perspective view of a laser machining device according to one embodiment.
Fig. 2 is a block diagram of the laser machining device and a setting terminal according to the embodiment.
Fig. 3 is a rear view of an oscillator unit according to the embodiment.
Fig. 4 is a diagram illustrating a display example of a display according to the embodiment.
Fig. 5 is a diagram illustrating a display example of the display according to the embodiment.
Fig. 6 is a side view of a head unit according to the embodiment.

### MODES FOR CARRYING OUT THE INVENTION

A laser machining device according to one embodiment will now be described with reference to the drawings.

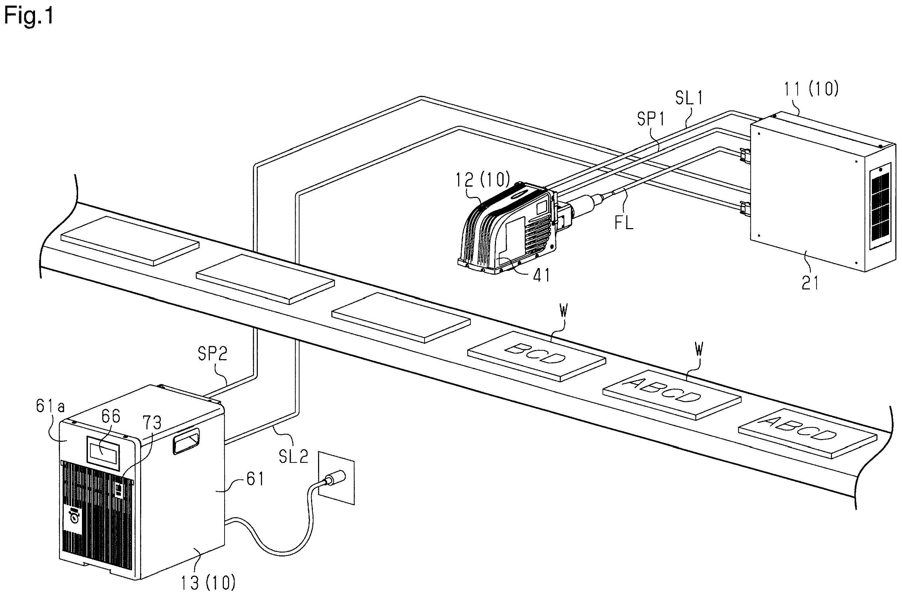

As shown in Fig. 1, a laser machining device 10 of the embodiment includes an oscillator unit 11, a head unit 12, and a controller unit 13.

As shown in Figs. 1 to 3, the oscillator unit 11 includes a housing 21, a laser beam source 22, a laser beam source drive circuit 23, an input-output circuit 24, and a storage 25, which are accommodated in the housing 21. In one example, the housing 21 is substantially box-shaped. The oscillator unit 11 further includes a fan 26 that cools the laser beam source 22 and various types of electronic components accommodated in the housing 21.

The laser beam source 22 may be any type of laser that emits laser beams such as a YAG laser, a CO2 laser, or a fiber laser.

The laser beam source drive circuit 23 is configured to drive the laser beam source 22.

The input-output circuit 24 is configured to send and receive signals to and from an external device. The storage 25 stores identification information of the oscillator unit 11. The identification information includes model (device type information) and serial number.

The housing 21 of the oscillator unit 11 in the embodiment is substantially box-shaped and has a side surface 21a that includes connectors 31, 32, 33 for connection with the head unit 12 and connectors 34, 35 for connection with the controller unit 13.

The connector 31 is a fiber cable connector for connection of an optical fiber cable FL, which is connected to the head unit 12. The optical fiber cable FL extending from the side surface 21a cannot be removed when connected to the connector 31. The connector 32 is a power cable connector for connection of a power cable SP1, which serves as a first electric cable connected to the head unit 12. The connector 33 is a signal cable connector for connection of a signal cable SL1, which serves as the first electric cable connected to the head unit 12. The connector 34 is a power cable connector for connection of a power cable SP2, which serves as a second electric cable connected to the controller unit 13. The connector 35 is a signal cable connector for connection of a signal cable SL2, which serves as the second electric cable connected to the controller unit 13. The cables SP1, SL1, SP2, SL2 are connectable in a removable manner to the corresponding connectors 32, 33, 34, 35.

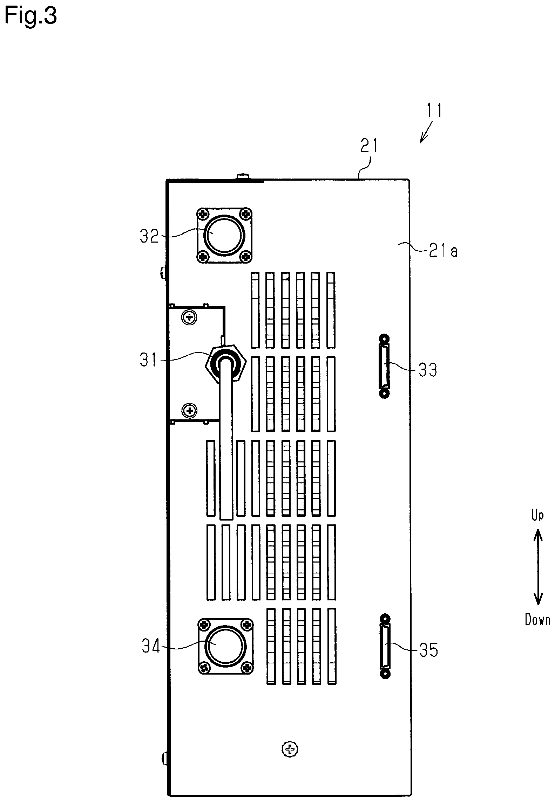

As shown in Fig. 3, one of the two connectors 33, 35, to which the signal cables SL1, SL2 are connected, namely, the connector 33 is arranged above the other one of the two connectors 33, 35, namely, connector 35. Further, one of the two connectors 32, 34, to which the power cables SP1, SP2 are connected, namely, the connector 32, is arranged above the other one of the two connectors 32, 34, namely, connector 34.

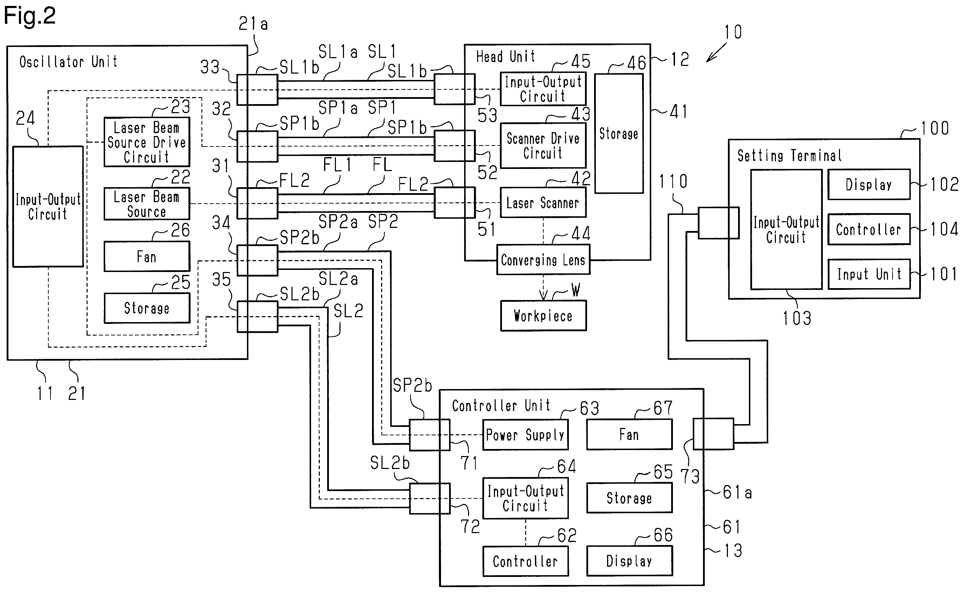

As shown in Fig. 2, the input-output circuit 24 is electrically connected to the two connectors 33, 35 of the oscillator unit 11. Thus, the input-output circuit 24 of the oscillator unit 11 sends and receives signals to and from the head unit 12 and the controller unit 13 via the signal cables SL1, SL2 connected to the connectors 33, 35.

As shown in Figs. 1 and 2, the head unit 12 includes a housing 41, a laser scanner 42, a scanner drive circuit 43, a converging lens 44, an input-output circuit 45, and a storage 46, which are arranged inside the housing 41. In one example, the housing 41 is substantially box-shaped.

The laser scanner 42 is configured to perform scanning with a laser beam emitted from the laser beam source 22. For example, the laser scanner 42 includes two galvanometer mirrors and actuators that drive the corresponding galvanometer mirrors. The scanner drive circuit 43 drives the laser scanner 42 and controls the actuators. The scanner drive circuit 43 controls and drives the two galvanometer mirrors with the actuators of the laser scanner 42 to scan the processed surface of a workpiece W in two directions (two-dimensional directions).

The converging lens 44 is configured to converge and emit a laser beam, which has undergone scanning in the laser scanner 42, to the outside.

The input-output circuit 45 is configured to send and receive signals to and from an external device. The storage 46 stores identification information of the head unit 12. The identification information includes model (device type information) and serial number.

The head unit 12 in the embodiment includes connectors 51, 52, 53 for connection with the oscillator unit 11. The connector 51 is a fiber cable connector for connection of the optical fiber cable FL, which is connected to the oscillator unit 11. The connector 52 is a power cable connector for connection of the power cable SP1, which is connected to the oscillator unit 11. The connector 53 is a signal cable connector for connection of the signal cable SL1, which is connected to the oscillator unit 11. The cables FL, SP1, SL1 are connected in a removable manner to the corresponding connectors 51, 52, 53.

The input-output circuit 45 is electrically connected to the connector 53. Thus, the input-output circuit 45 of the head unit 12 sends and receives signals to and from the oscillator unit 11 via the signal cable SL1.

The controller unit 13 includes a substantially box-shaped housing 61, a controller 62, a power supply 63, an input-output circuit 64, and a storage 65, which are accommodated in the housing 61. The controller unit 13 further includes a display 66 that is exposed from the housing 61 to the outside. The controller unit 13 further includes a fan 67 that cools the power supply 63 and various types of electronic components inside the housing 61.

The controller 62 uses processing data about engraved characters or the like to generate control data including scan position data (coordinate data) and laser-on-off data that correspond to machining positions on the workpiece W. The controller 62 transmits the control data to the input-output circuit 24 of the oscillator unit 11 via the input-output circuit 64 and the signal cable SL2. The input-output circuit 24 of the oscillator unit 11 obtains the laser-on-off data about the oscillator unit 11 from the transmitted control data and transmits the control data to the input-output circuit 45 of the head unit 12 via the signal cable SL1. The input-output circuit 45 of the head unit 12 obtains the scan position data about the head unit 12 from the transmitted control data.

The controller 62 obtains the identification information of the connected units 11, 12. Further, the controller 62 determines whether the obtained identification information of the oscillator unit 11 and the obtained identification information of the head unit 12 correspond to the identification information of the controller unit 13. That is, the controller 62 is used as a determination unit.

The power supply 63 is connected to an external power supply, such as a commercial power source, to supply power to the laser beam source drive circuit 23 and the scanner drive circuit 43 through the power cables SP1, SP2. That is, the power supply 63 is used as a laser power supply and a scan power supply.

The input-output circuit 64 is configured to send and receive signals to and from an external device. The storage 65 stores the identification information of the controller unit 13. The identification information includes model (device type information) and serial number. The storage 65 can store the processing data in addition to the identification information in files.

The controller unit 13 in the embodiment includes connectors 71, 72 for connection with the oscillator unit 11. The connector 71 is a power cable connector for connection of the power cable SP2, which is connected to the oscillator unit 11. The connector 72 is a signal cable connector for connection of the signal cable SL1, which is connected to the oscillator unit 11. The cables SP1, SL2 are connected in a removable manner to the corresponding connectors 71, 72.

In the embodiment, as shown in Fig. 2, the signal cable SL1 includes a cable body SL1a and two connectors SL1b arranged at the ends of the cable body SL1a. The signal cable SL2 includes a cable body SL2a and two connectors SL2b arranged at the ends of the cable body SL2a. The power cable SP1 includes a cable body SP1a and two connectors SP1b arranged at the ends of the cable body SP1a. The power cable SP2 includes a cable body SP2a and two connectors SP2b arranged at the ends of the cable body SP2a. The optical fiber cable FL includes a cable body FL1 and two connectors FL2 arranged at the ends of the cable body FL1.

The lengths of the cable body SP1a of the power cable SP1 and the cable body SL1a of the signal cable SL1, which connect the oscillator unit 11 to the head unit 12, are substantially the same as the length of the cable body FL1 of the optical fiber cable FL, which connects the oscillator unit 11 to the head unit 12. Further, the lengths of the cable body SP2a of the power cable SP2 and the cable body SL2a of the signal cable SL2, which connect the oscillator unit 11 to the controller unit 13, are greater than the length of the cable body FL1 of the optical fiber cable FL. Preferably, the cable body SP2a of the power cable SP2 and the cable body SL2a of the signal cable SL2 have substantially the same length. The lengths of the cable bodies FL1, SL1a, SP1a, SL2a, SP2a are the lengths of exposed portions of the corresponding connectors FL2, SL1b, SP1b, SL2b, SP2b. The phrase of "substantially the same" indicates a state of being the same as allowed by the specifications and allows for variations resulting from manufacturing tolerance.

As described above, the cable bodies SP1a, SL1a, FL1 of the power cable SP1, the signal cable SL1, and the optical fiber cable FL have substantially the same length. This allows the routing path (layout) of the cable bodies SP1a, SL1a, FL1 to be substantially the same. Thus, the cable bodies SP1a, SL1a, FL1 can be routed together.

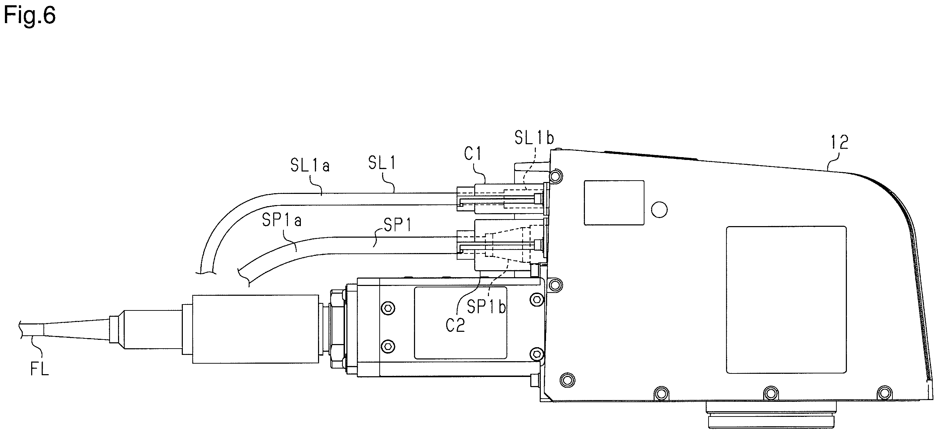

As shown in Fig. 6, waterproof connector covers C1, C2 are respectively attached to the connectors SL1b, SP1b, which are connected to the head unit 12. Thus, the connectors SL1b, SP1b are impervious to liquids.

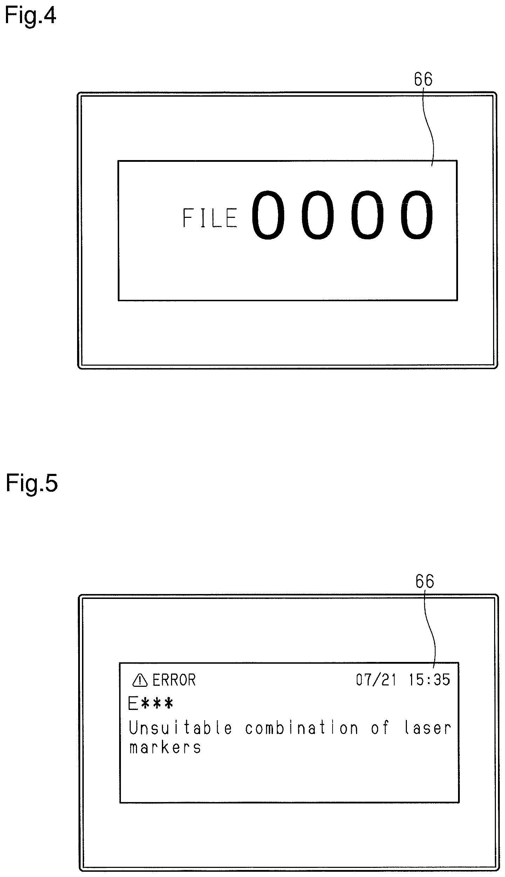

As shown in Fig. 4, the display 66 is configured to normally display a file number. For example, the display 66 displays a file number of preset processing data to show the currently selected file to a user. Further, the display 66 may display the identification information of the head unit 12 and the identification information of the oscillator unit 11. In this case, the display 66 may normally display a file number and display the identification information when the user operates an operation switch (not shown). The display 66 may have a touch sensor functionality to display the identification information as described above when a software switch displayed on the display 66 is operated.

As shown in Fig. 5, the display 66 enters a display mode for displaying a message when an error occurs in the laser machining device 10. Preferably, the display 66 immediately displays a message when an error occurs. In one example, the display 66 displays the date and time of when the error occurred, an error code, and details of the error. In the embodiment, the controller 62 determines whether the obtained identification information of the oscillator unit 11 and the obtained identification information of the head unit 12 correspond to the identification information of the controller unit 13. When the information is not in correspondence, the controller 62 displays a message indicating such a situation on the display 66. In this case, the display 66 separately displays, for example, whether the identification information of the head unit 12 is different and whether the identification information of the oscillator unit 11 is different. The controller 62 operates the display 66 in a first display mode when the information of the head unit 12 or the oscillator unit 11 is not in correspondence and operates the display 66 in a second display mode, which differs from the first display mode, when the information of both the head unit 12 and the oscillator unit 11 are not in correspondence. One example of the difference between the first display mode and the second display mode may be obtained, for example, by changing the background color or changing the details of the error on the display screen of the display 66. At least one of the first display mode or the second display mode may be changed by a setting terminal 100, which will be described later. The period of time during which the display 66 displays a message indicating non-corresponding identification may be changed by the setting terminal 100, which will be described later.

The fan 67 of the controller unit 13 has a greater cooling capability than the fan 26 of the oscillator unit 11. The difference in cooling capability between the fans 26, 67 results from the difference in size between the fans 26, 67, the difference in rotation speed between the fans 26, 67, the difference in quantity between the fans 26, 67, or a combination of these parameters. More specifically, when at least one of the size, the rotation speed, and the quantity differs between the fan 67 and the fan 26 and the airflow that can be generated by the fan 67 is greater than airflow that can be generated by the fan 26, the fan 67 will have a greater cooling capability.

The controller unit 13 includes a connector 73, which is arranged on a front surface 61a of the housing 61 and connectable to the setting terminal 100.

The setting terminal 100 can adjust various settings of the laser machining device 10 when implemented by installing dedicated application software in, for example, a versatile terminal such as a tablet terminal, a laptop computer, a personal digital assistant (PDA), or a smartphone. In one example, the setting terminal 100 includes an input unit 101 that allows the user to input data, a display 102 that displays various types of information, an input-output circuit 103, and a controller 104 that controls each unit. The setting terminal 100 is configured to communicate with the controller unit 13 via a cable 110. The input unit 101, when, for example, operated to change at least one of the first display mode or the second display mode, stores setting information related to the first display mode and the second display mode in the storage 65 of the controller unit 13. The input unit 101, when operated to change a display time during which the display 66 displays information related to non-correspondence, stores the set display time in the storage 65 of the controller unit 13.

The operation of the embodiment will now be described.

In the laser machining device 10 of the embodiment, the controller 62, for example, converts the processing data set with the setting terminal 100 to control data and outputs the control data so that the laser beam source 22 and the laser scanner 42, which are driven in accordance with the output control data, irradiate the workpiece W with a laser beam.
(1) The oscillator unit 11 includes the connectors 31 to 35 that are arranged on the side surface 21a of the housing 21. Thus, there is no need for the distance to be longer than necessary between the head unit 12 and the oscillator unit 11, which are connected by the power cable SP1, the signal cable SL1, and the optical fiber cable FL. The distance can be increased between the oscillator unit 11 and the controller unit 13, which are connected by the power cable SP2 and the signal cable SL2. Further, the oscillator unit 11 and the head unit 12 are connected by the power cable SP1, the signal cable SL1, and the optical fiber cable FL. This allows the cables SP1, SL1, FL to be laid out along the same routing path. Thus, the routing path of the cables SP1, SL1, FL can be simplified, and the degree of freedom for layout can be increased. The controller unit 13 includes the display 66 so that information related to non-corresponding identification is displayed at least on the display 66. Thus, while increasing the degree of freedom for layout, non-corresponding identification information can be checked from the controller unit 13 when connecting the head unit 12 and the oscillator unit 11, which are set at a location where machining is performed and separated from where the controller unit 13 is set. This facilitates the task for performing a re-connecting to the proper unit. In the oscillator unit 11, the connectors 31 to 35 for the cables are arranged on the side surface 21a of the housing 21. This simplifies the layout of the cables SP1, SP2, SL1, SL2, FL.
(2) When the head unit 12 does not correspond to the controller unit 13, the controller 62 displays a message indicating that the head unit 12 does not correspond on the display 66. When the oscillator unit 11 does not correspond to the controller unit 13, the controller 62 displays a message indicating that the oscillator unit 11 does not correspond on the display 66. This allows the user to be notified of the non-correspondence.
(3) The display 66 displays the identification information of the head unit 12 and the identification information of the oscillator unit 11. This allows the user to check the identification information.
(4) The display 66 displays a message in the first display mode when only one of the head unit 12 or the oscillator unit 11 does not correspond, and the display 66 displays a message in the second display mode, which differs from the first display mode, when both the head unit 12 and the oscillator unit 11 do not correspond. This allows the user to easily check which unit does not correspond based on the difference in the display mode.
(5) The storage 65, which serves as a display mode setting unit, sets and changes at least one of the first display mode or the second display mode of the display 66. This allows the display mode to be changed in accordance with user preference.
(6) The storage 65, which serves as a time changing unit, sets and changes the display time of the display 66. This allows the display time to be changed in accordance with user preference.
(7) The power cable SP1 and the signal cable SL1 that form the first electric cable have substantially the same length as the optical fiber cable FL. The power cable SP2 and the signal cable SL2 that form the second electric cable are longer than the optical fiber cable FL. This allows the power cable SP1, the signal cable SL1, and the optical fiber cable FL to be laid out in the same routing path. Further, the power cable SP2 and the signal cable SL2, which are longer than the optical fiber cable FL, allows for a layout over a long distance.
(8) The controller unit 13 includes the connector 73 for connection of the setting terminal 100, which serves as a separate device. This allows the functionality and the configuration of the controller unit 13 to be simplified.
(9) The controller unit 13 sends control data, including at least laser-on-off data and scan position data, to the oscillator unit 11 and the head unit 12 via the power cables SP1, SP2, and the signal cables SL1, SL2. The oscillator unit 11 obtains the laser-on-off data from the control data, and the head unit 12 obtains the scan position data from the control data. In this manner the units 11, 12 obtain the necessary data used to drive the units 11, 12.
(10) The controller unit 13 and the oscillator unit 11 include the corresponding cooling fans 67, 26. This avoids anomalous heat generation of the power supply 63 and the laser beam source 22. Preferably, the quantity and size of the fans 67, 26 are adjusted in accordance with the amount of heat.

The above-described embodiments may be modified as follows. The above-described embodiments and the following modifications can be combined as long as the combined modifications remain technically consistent with each other.

In the above embodiment, the controller 62 may prohibit machining with the laser machining device 10 when, for example, determining that the identification information is not in correspondence. Examples of a machining prohibited state include invalidation of a machining start operation performed on the input unit 101 of the setting terminal 100. Further, the machining prohibited state includes the interruption of power supplied to the laser beam source 22. When the device type (model number) included in identification information is not in correspondence, the power supplied to the laser beam source 22 is interrupted to ensure safety.

In the above embodiment, the setting terminal 100 includes the input unit 101 that allows a machining starting operation to be performed. Instead, the controller unit 13 of the laser machining device 10 may include a switch for starting machining. The input unit 101 may be a switch on a touch panel or a mechanical switch.

In the above embodiment, the optical fiber cable FL is not removable from the connector 31. Instead, the optical fiber cable FL may be removable (detachable) from the connector 31.

The connectors 32 to 35 of the oscillator unit 11, the connectors 51 to 53 of the head unit 12, and the connectors 71, 72 of the controller unit 13 do not need to be removable. For example, one of the connector 32 of the oscillator unit 11 or the connector 52 of the corresponding head unit 12 may be removable and the other one may be non-removable. One of the connector 33 of the oscillator unit 11 or the connector 53 of the corresponding head unit 12 may be removable and the other one may be non-removable. One of the connector 34 of the oscillator unit 11 or the connector 71 of the corresponding controller unit 13 may be removable and the other one may be non-removable. One of the connector 35 of the oscillator unit 11 or the connector 72 of the corresponding controller unit 13 may be removable and the other one may be non-removable.

In the above embodiment and modifications, the connectors 31, 32, 33, 34, 35 for connection of the cables FL, SP1, SL1, SP2, SL2 are arranged on the side surface 21a of the oscillator unit 11. The configuration of connectors for connection of cables on, for example, the side surface 21a of the housing 21 includes forms that will now be described. The present disclosure includes a case in which through-holes extend through the side surface 21a of the housing 21, and the cables FL, SP1, SL1, SP2, SL2 are inserted through the through-holes and connected to the boards or parts inside the housing 21. In this configuration, the cables FL, SP1, SL1, SP2, SL2 extend out of the side surface 21a of the housing 21. Such a configuration is not limited to the oscillator unit 11 and may be applied to the head unit 12 and the controller unit 13. Specifically, through-holes may extend through a side surface of the housing 41 of the head unit 12, and the cables FL, SP1, SL1 may be inserted through the through-holes and connected to boards or parts inside the housing 41. That is, the cables FL, SP1, SL1 may extend out of the side surface of the housing 41. Further, through-holes may extend through a side surface of the housing 61 of the controller unit 13, and the cables SP2, SL2 may be inserted through the through-holes and connected to the boards or parts inside the housing 61. That is, the cables SP2, SL2 may extend out of the side surface of the housing 61.

In the above embodiment, the setting terminal 100 does not need to be wire-connected to the connector 73 of the controller unit 13. The setting terminal 100 may be configured to communicate with an external device through wireless communication such as Wi-Fi, Bluetooth (registered trademark), near field communication (NFC), infrared communication, or the like. Any one of the oscillator unit 11, the head unit 12, and the controller unit 13 may be configured to perform communication through the same wireless communication as that used by the setting terminal 100. This eliminates the need for connecting the cable 110 to input settings. Since the cable 110 does not have to be laid out, connected, and disconnected, user convenience is improved. Further, when the head unit 12 is configured to perform communication through wireless communication, the head unit 12 allows for checking and changing of settings from where the head unit 12 is set, which is where machining is performed, when there is a need to check or change the settings during maintenance or when performing a setting task, which includes a resetting task following a setting task, and the like. This improves productivity.

In the above embodiment, the connector 73 connected to the setting terminal 100 does not need to be arranged on the front surface 61a of the housing 61 of the controller unit 13. Instead, the connector 73 may be arranged on the rear surface or the side surface of the housing 61. Further, the connector 73 may be omitted and the functionality of, for example, the setting terminal 100 may be incorporated in the controller unit 13.

In the above embodiment, the display 66 displays information related to a non-corresponding unit. In addition, the display 102 of the setting terminal 100 may display information related to a non-corresponding unit.

In the above embodiment, the length of the cable body SL1a of the signal cable SL1, the length of the cable body SP1a of the power cable SP1, and the length of the cable body FL1 of the optical fiber cable FL are substantially the same. Instead, all or certain ones of the cable bodies SL1a, SP1a, FL1 may have different lengths.

In the above embodiment, the length of the cable body SL2a of the signal cable SL2 and the length of the cable body SP2a of the power cable SP2 do not need to be substantially the same. Instead, the cable bodies SL2a, SP2a may have different lengths.

In the above embodiment, the fan 67 cools the power supply 63, and the fan 26 cools the laser beam source 22. Instead, the fans may be replaced by other cooling means. The cooling means including the fans 26, 67 may also be omitted.

In the above embodiment, the controller unit 13 and the controller 62, 104 do not need to execute all processes by processing software. For example, the controller unit 13 and the controllers 62, 104 may include a dedicated hardware circuit (such as application-specific integrated circuit: ASIC) that executes hardware processing for at least part of their processes. Specifically, the controller unit 13 and the controllers 62, 104 may be circuitry including: 1) one or more processors that operate according to a computer program (software); 2) one or more dedicated hardware circuits that execute at least part of various processes, or 3) a combination thereof. The processor includes a CPU and memory such as RAM and ROM. The memory stores program code or commands configured to cause the CPU to execute processes. The memory, or computer-readable media, includes any type of media that is accessible by general-purpose computers or dedicated computers.

All features disclosed in the specification and/or the claims are intended to be disclosed separately and independently of each other for the purpose of disclosure and for the purpose of limitation of the inventions described in the claims independently of the combination of features in the embodiments and/or the claims. The descriptions representing all numerical ranges or sets of constituent elements disclose all possible intermediate values or intermediate constituent elements as limitations of numerical ranges for the purpose of disclosure and for the purpose of limitation of the inventions described in the claims especially.

### DESCRIPTION OF THE REFERENCE NUMERALS

10...laser machining device, 11...oscillator unit, 12...head unit, 13...controller unit, 21...housing, 21a...side surface, 22...laser beam source, 23...laser beam source drive circuit, 25...storage, 26...fan, 31...connector (third connector), 32, 33...connector (first connector), 34, 35...connector (second connector), 42...laser scanner, 43...scanner drive circuit, 62... controller (determination unit), 63...power supply, 66...display, 67...fan, 73...connector (terminal connector), 100...setting terminal, SP1...power cable (first electric cable), SL1...signal cable (first electric cable), FL...optical fiber cable, SP2...power cable (second electric cable), SL2...signal cable (second electric cable)

## Claims

1. A laser machining device comprising:
an oscillator unit including a laser beam source that emits a laser beam and a laser beam source drive circuit that drives the laser beam source;
a head unit connected to the oscillator unit by a first electric cable and an optical fiber cable, the head unit including a laser scanner that performs scanning with the laser beam transmitted through the optical fiber cable and a scanner drive circuit that drives the laser scanner; and
a controller unit connected to the oscillator unit by a second electric cable, the controller unit including a laser power supply that supplies power to the laser beam source drive circuit through the second electric cable and a scan power supply that supplies power to the scanner drive circuit through the second electric cable and the first electric cable, wherein
identification information is set in advance for each of the oscillator unit, the head unit, and the controller unit,
the controller unit includes
a storage that stores the identification information of itself, the identification information of the oscillator unit that corresponds to the controller unit, and the identification information of the head unit that corresponds to the controller unit,
a determination unit that compares identification information of the oscillator unit connected to the controller unit and identification information of the controller unit connected to the controller unit with the identification information stored in the storage and determines whether the information is in correspondence, and
a display that displays information related to non-correspondence when the determination unit determines that the information is in non-correspondence, and
the oscillator unit includes
a housing that accommodates the laser beam source and the laser
beam source drive circuit, and
a first connector connected to the first electric cable, a second connector connected to the second electric cable, and a third connector connected to the optical fiber cable, wherein the first connector, the second connector, and the third connector are arranged on a side surface of the housing.

2. The laser machining device according to claim 1, wherein
when the determination unit determines that the head unit does not correspond to the controller unit, the display displays a message indicating that the head unit is not in correspondence, and
when the determination unit determines that the oscillator unit does not correspond to the controller unit, the display displays a message indicating that the oscillator unit is not in correspondence.

3. The laser machining device according to claim 1 or 2, wherein the display displays the identification information of the head unit and the identification information of the oscillator unit.

4. The laser machining device according to any one of claims 1 to 3, wherein
the display displays a message in a first display mode when only one of the head unit or the oscillator unit is not in correspondence, and
the display displays a message in a second display mode, which differs from the first display mode, when both the head unit and the oscillator unit are not in correspondence.

5. The laser machining device according to claim 4, further comprising a display mode setting unit that sets and changes at least one of the first display mode or the second display mode of the display.

6. The laser machining device according to any one of claims 1 to 5, further comprising a time changing unit that allows a display time of the display to be set and changed.

7. The laser machining device according to any one of claims 1 to 6, wherein the determination unit sets the laser machining device to a machining prohibited state when determining non-correspondence in addition to displaying a message on the display.

8. The laser machining device according to claim 7, wherein
the identification information includes device type information, and
the determination unit determines whether the device type information is in correspondence and, when the device type information is not in correspondence, sets the laser machining device to the machining prohibited state by suspending supply of power to the oscillator unit until device type information comes into correspondence.

9. The laser machining device according to any one of claims 1 to 8, wherein the first connector is separated from the second connector.

10. The laser machining device according to any one of claims 1 to 9, wherein
the first electric cable and the optical fiber cable have substantially the same length, and
the second electric cable is longer than the optical fiber cable.

11. The laser machining device according to any one of claims 1 to 10, wherein the controller unit further includes a terminal connector for connection of a separate setting terminal.

12. The laser machining device according to any one of claims 1 to 11, wherein
the controller unit is configured to send control data, including at least laser-on-off data and scan position data, to the oscillator unit and the head unit through the first electric cable and the second electric cable,
the oscillator unit obtains the laser-on-off data from the control data, and
the head unit obtains the scan position data from the control data.

13. The laser machining device according to any one of claims 1 to 12, wherein
the controller unit and the oscillator unit each include a cooling fan, and
the cooling fan of the controller unit has a greater cooling capability than the cooling fan of the oscillator unit.
